# EUROPÄISCHE PATENTSCHRIFT

(11) **EP 1 057 241 B1**
(45) Veröffentlichungstag und Bekanntmachung des Hinweises auf die Patenterteilung: **06.02.2008**
(21) Anmeldenummer: 99962034.7
(22) Anmeldetag: 26.10.1999
(51) Int. Cl.: H02K 11/00, B60J 7/057, E05F 15/16, E05F 15/10

(54) **ANTRIEBSVORRICHTUNG FÜR EIN VERSTELLBARES TEIL EINES FAHRZEUGS**
DRIVE DEVICE FOR AN ADJUSTABLE COMPONENT OF A VEHICLE
DISPOSITIF D'ENTRAINEMENT POUR UNE PARTIE DEPLACABLE D'UN VEHICULE

(30) Priorität: 18.12.1998 DE 19858630
(43) Veröffentlichungstag der Anmeldung: 06.12.2000
(73) Patentinhaber: ROBERT BOSCH GMBH, 70442 Stuttgart (DE)
(72) Erfinder: HILS, Alois, D-77880 Sasbach (DE); DREIER, Friedrich-Wilhelm, D-76547 Sinzheim (DE); BAEUERLE, Christian, D-77815 Bühl (DE)
(86) Internationale Anmeldenummer: PCT/DE1999/003406
(87) Internationale Veröffentlichungsnummer: WO 2000/038299

(56) Entgegenhaltungen:
- DE-A- 19 755 337
- DE-C- 19 712 185

## Beschreibung

### Stand der Technik

Die Erfindung geht aus von einer Antriebsvorrichtung nach der Gattung des Patentanspruchs 1.

Durch die Druckschrift DE 197 12 185 C1 ist eine Antriebsvorrichtung bekannt für ein zwischen Endstellungen verstellbares Teil eines Fahrzeugs, insbesondere für eine Dachplatte eines Fahrzeugdaches, mit einem Elektromotor, der über ein erstes Untersetzungsgetriebe mit einem auf einer Welle sitzenden Ritzel verbunden ist, das mit dem verstellbaren Teil in Antriebsverbindung steht, mit einer den Elektromotor steuernden Schalteinrichtung zum Stillsetzen des Elektromotors in mindestens einer vorbestimmten Stellung des verstellbaren Teiles, mit einem zweiten Untersetzungsgetriebe, das ein drehbares Abtriebselement aufweist, mit einem mit dem Abtriebselement verbundenen Schaltkörper zum Betätigen der Schalteinrichtung, wobei der Schaltkörper wenigstens einen Nordpol und einen Südpol aufweist und zur Schalteinrichtung ein magnetfeldempfindlicher Sensor gehört, der auf einer Leiterbahnplatte der Schalteinrichtung angeordnet ist. Hierzu erstreckt sich die Leiterbahnplatte bis über die Bewegungsbahn des Schaltkörpers. Wie anhand der Figur 4 der Druckschrift DE 197 12 185 C1 erkennbar ist, weist die Leiterbahnplatte im Bereich des magnetfeldempfindlichen Sensors einen Fortsatz auf, der beispielsweise aus einem ansonsten rechteckigen Grundriß der Leiterbahnplatte herausragt. Erkennbar verursacht dieser Fortsatz Leiterbahnplattenabfall und damit Kosten für vergeudeten Werkstoff und Kosten für die Entsorgung des vergeudeten Werkstoffs.

Das zweite Getriebe dieser Antriebsvorrichtung ist nach Art eines Exzenterzahnradgetriebes ausgebildet. Das Abtriebselement ist hier als ein Innenzahnrad ausgebildet, das zur Welle des ersten Untersetzungsgetriebes konzentrisch drehbar gelagert ist. Anstelle eines solchen Exzenterzahnradgetriebes kann natürlich auch ein Stirnrädergetriebe mit einer Abtriebswelle oder ein Schneckengetriebe gemäß der deutschen Patentschrift 1 024 373 verwendet werden. Im Ausführungsbeispiel gemäß der deutschen Patentschrift dient das Schneckenrad als Abtriebselement und der Schaltkörper ist in Form eines Stiftes ausgebildet und radial am Schneckenrad befestigt. Der Stift betätigt elektrische Kontakte.

Aus DE 19 755 337 ist ein Antriebseinrichtung bekannt, wobei ein Magnetflusskörper zwischen einem Schaltkörper und einem magnetempfindlichen Sensor angeordnet ist.

### Vorteile der Erfindung

Die Antriebsvorrichtung mit den kennzeichnenden Merkmalen des Patentanspruchs 1 hat den Vorteil, daß für die Leiterbahnplatte ein beispielsweise rechteckiger Grundriß wählbar ist. Zum Herstellen einer solchen rechteckig umgrenzten Leiterbahnplatte braucht man in technisch einfacher Weise plattenartiges Ausgangsmaterial lediglich längs und quer zu zerteilen. Bei der Herstellung des Magnetflußleitkörpers kann man von Stabmaterial oder Drahtmaterial ausgehen, so daß nur Abfall entsteht am Ende von Stangen oder von Drahtwickeln. Metalldraht- oder Stabmaterialabfall ist wieder einschmelzbar und dadurch weiter verwendbar.

Die kennzeichnenden Merkmale des Anspruches 2 ergeben den Vorteil, daß der Schaltkörper in technisch einfacher Weise magnetisierbar ist und des weiteren von dem Schaltkörper ausgehender Magnetfluß gut auf den magnetfeldempfindlichen Sensor konzentrierbar ist.

### Zeichnung

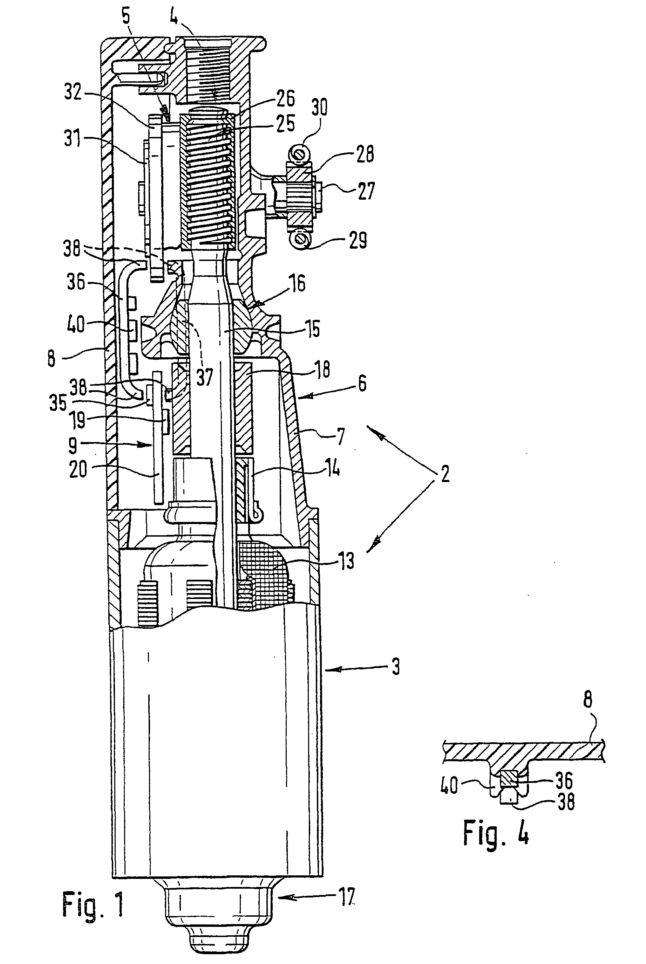

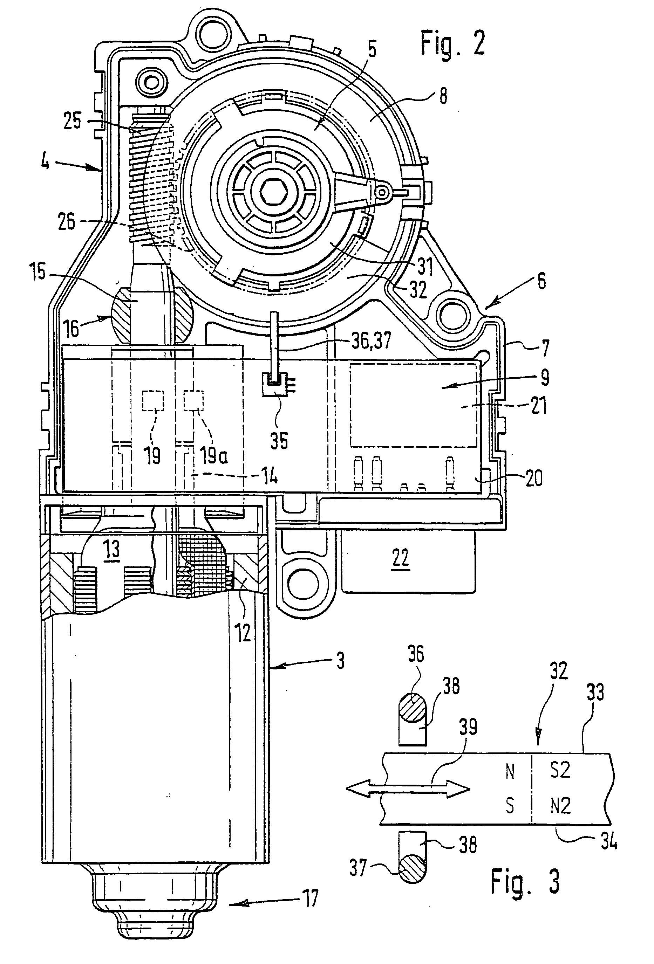

Ein Ausführungsbeispiel der erfindungsgemäßen Antriebsvorrichtung für ein verstellbares Teil eines Fahrzeugs ist in der Zeichnung dargestellt und nachfolgend näher beschrieben. Es zeigen Figur 1 die Antriebsvorrichtung in der Seitenansicht und dabei in teilweise aufgeschnittenem Zustand, Figur 2 eine Draufsicht auf die Antriebsvorrichtung gemäß der Figur 1, Figur 3 eine Ausschnittvergrößerung für ein Detail aus den Figuren 1 und 2 in der Seitenansicht und Figur 4 ein Detail aus der Figur 1.

### Beschreibung des Ausführungsbeispiels

Die erfindungsgemäße Antriebsvorrichtung 2, die in den Figuren 1 und 2 dargestellt ist, hat einen Elektromotor 3, ein erstes Untersetzungsgetriebe 4, ein zweites Untersetzungsgetriebe 5, ein Gehäuse 6 aus einem Gehäuseunterteil 7 und einem Gehäuseoberteil 8 und eine den Elektromotor 3 steuernde Schalteinrichtung 9.

Der Elektromotor 3 ist beispielsweise ein Gleichstrommotor und besitzt Feldmagnete 12, innerhalb der Feldmagnete 12 einen drehbaren Anker 13, dem Anker 13 benachbart einen Kollektor 14, eine den Anker 13 und den Kollektor 14 tragende Ankerwelle 15 und ein erstes Motorwellenlager 16 sowie ein zweites Motorwellenlager 17. Zwischen dem ersten Motorwellenlager 16 und dem Kollektor 14 ist beispielsweise ein hohler Magnetkörper 18 von an sich bekannter Art mit beispielsweise auf seinem Umfang verteilt einem Nordpol und einem Südpol verdrehsicher auf der Ankerwelle 15 angeordnet. Entlang dem Umfang des hohlen Magnetkörpers 18 ist wenigstens ein magnetfeldempfindlicher Sensor 19, 19a, beispielsweise ein Hall-Sensor, ortsfest angebracht. Beispielsweise werden die Hall-Sensoren 19, 19a getragen von einer Leiterbahnplatte 20. Diese Leiterbahnplatte 20 ist ein tragendes Bauteil für die steuernde Schalteinrichtung 9. Die Leiterbahnplatte 20 ist beispielsweise am Gehäuseunterteil 7 befestigt und dabei so ausgerichtet, daß sie mit einem Mindestabstand den Kollektor 14 und den Hall-Sensor 19 kreuzt. Dieser Abstand ist in der Figur 1 gut ersichtlich. Daß die Leiterbahnplatte 20 den Kollektor 14 und den Hall-Sensor 19 kreuzt, ist in der Figur 2 gut zu erkennen. Der Leiterbahnplatte 20 wurde die Form eines schlanken Rechteckes gegeben, so daß sie sich aus dem angesprochenen Bereich, in dem sich der Kollektor 14 und der hohle Magnetkörper befinden, vorbei an dem ersten Untersetzungsgetriebe 4 und dem zweiten Untersetzungsgetriebe 5 neben den Elektromotor 3 erstreckt. Dort befinden sich beispielsweise eine Relaisanordnung 21 und ein mit der Leiterbahnplatte 20 verbundener Steckersockel 22 und weitere nicht dargestellte elektrische Elemente. Beispielsweise führen von der Relaisanordnung 21 nicht dargestellte Leiterbahnen zu nicht dargestellten Bürsten, die federnd an den Kollektor 14 angedrückt sind. Dabei ist die Relaisanordnung 21 derart gestaltet, daß der Motor in unterschiedlichen Drehrichtungen drehend einschaltbar und ausschaltbar ist.

Auf das Gehäuseunterteil 7 ist das Gehäuseoberteil 8 aufgesetzt, wobei das Gehäuseunterteil 7 und das Gehäuseoberteil 8 die Leiterbahnplatte 20 allseitig schützend umgeben. Insoweit ist die an der Leiterbahnplatte 20 angeordnete Steuerschalteinrichtung 9 in die Antriebsvorrichtung 2 integriert.

Die Ankerwelle 15 ist im Bereich des ersten Ankerlagers 16 verlängert zu einer Schneckenwelle 25, die in ein Schneckenrad 26 eingreift. Das Schneckenrad 26 ist mit einer Welle 27 verdrehfest verbunden und mittels dieser Welle 27 in dem Gehäuseunterteil 7 drehbar gelagert. Die Schneckenradwelle 25, das Schneckenrad 26 und die Welle 27 bilden das erste Untersetzungsgetriebe 4. Die Welle 27 ist mit einem außerhalb des Gehäuseteils 7 angeordneten Ritzel 28 verdrehfest verbunden. Das Ritzel 28 befindet sich im Eingriff mit zwei Zug- und Druckmitteln 29, 30 des biegsamen Typs, die beispielsweise zu einer nicht dargestellten Dachplatte eines Fahrzeugdaches hin verlegt sind und mit dieser Dachplatte verbunden sind. Diese Zug- und Druckmittel 29, 30 sind nicht Bestandteil der Erfindung, sondern können dem Stand der Technik entnommen werden. Es wird lediglich der Vollständigkeit halber darauf hingewiesen, daß natürlich auch anstelle einer Dachplatte ein anderes verstellbares Teil wie Fensterscheibe oder Fahrzeugtür antreibbar ist.

Im Ausführungsbeispiel ist in einer durch die Druckschrift DE 197 12 185 C1 offenbarten Weise das zweite Untersetzungsgetriebe 5 mechanisch an die Welle 27 des ersten Untersetzungsgetriebes 4 angekoppelt. Das zweite Untersetzungsgetriebe 5 ist beispielsweise in der in der Druckschrift DE 197 12 185 C1 oder aber in einer anderen beispielsweise aus dem Stand der Technik entnehmbaren Weise ausgebildet. Im Rahmen der vorliegenden Erfindung kommt es lediglich darauf an, daß das zweite Untersetzungsgetriebe 5 ein drehbares Abtriebselement 31 zum Tragen eines Schaltkörpers 32 und zum Bewegen dieses Schaltkörpers 32 auf einer kreisbogenförmigen Bahn. Dabei ist das zweite Untersetzungsgetriebe 5 derart ausgelegt, daß bei einer Verstellung beispielsweise einer Dachplatte zwischen zwei konstruktiv festgelegten Endstellungen das Abtriebselement 31 eine Drehung von weniger als 360° erfährt. Beispielsweise kann ein Konstrukteur die Verdrehbarkeit auf 300° einschränken.

Im Ausführungsbeispiel ist der Schaltkörper 32 nach Art einer geschlossenen Kreisringscheibe ausgebildet und weist eine erste mit einer Kreisringfläche begrenzte Stirnseite 33 und eine zweite, ebenfalls durch eine Kreisringfläche begrenzte zweite Stirnseite 34 auf. Wie dies in der Figur 3 vergrößert dargestellt ist, ist der Schaltkörper 2 derart magnetisiert, daß er an einer der beiden Stirnseiten einen Nordpol N und an der anderen der Stirnseiten einen zugeordneten Südpol S aufweist. Beispielsweise in Umfangsrichtung versetzt kann sich neben dem Nordpol N ein Südpol S2 befinden, wobei dem Südpol S2 ein Nordpol N2 auf der gegenüberliegenden Stirnseite zugeordnet ist, der sich benachbart zum zuerst genannten Südpol S befindet.

Der Schaltkörper 32 dient der Fernbetätigung eines magnetfeldempfindlichen Sensors 35, der auf der Leiterbahnplatte 20 befestigt ist. Wie in den Figuren 1 und 2 leicht erkennbar ist, ist ein Abstand zwischen dem magnetfeldempfindlichen Sensor 35 und dem magnetisierten Schaltkörper 32 mehrfach so groß als Gehäuseabmessungen des magnetfeldempfindlichen Sensors 35. Der magnetfeldempfindliche Sensor 35 ist beispielsweise ein Hall-Sensor und derart ausgerichtet, daß im wesentlichen senkrecht zur Leiterbahnplatte 20 verlaufende Magnetfeldlinien die Erzeugung und Abgabe von SensorSignalen zur Folge haben.

Damit in dem erwähnten großen Abstand von dem Schaltkörper 32 ein von diesem ausgehendes Magnetfeld dann, wenn der Schaltkörper 32 eine vom Konstrukteur vorgeplante Schaltstellung einnimmt, eine genügend starke Durchflutung des magnetfeldempfindlichen Sensors 35 bewirkt, sind zwischen dem magnetfeldempfindlichen Sensor 35 und dem Schaltkörper 32 bzw. dessen beide Stirnseiten 33 und 34, ein erster Magnetflußleitkörper 36 und ein zweiter Magnetflußleitkörper 37 angeordnet. Beispielsweise bestehen die Magnetflußleitkörper 36 und 37 aus Drahtabschnitten eines weichmagnetischen Werkstoffes. Beispielsweise ist Draht mit quadratischem Querschnitt verwendbar. Beispielsweise haben die Magnetflußleitkörper 36 und 37 winkelig gebogene Enden 38, die einerseits gegen den magnetfeldempfindlichen Sensor 35 und andererseits gegen Stirnseiten 33, 34 des Schaltkörpers 32 gerichtet sind. Beispielsweise können solche Enden 38 auf dem magnetfeldempfindlichen Sensor 35 und unterseitig an der Leiterbahnplatte 20 anliegen zur Vermeidung von nachteilig langen Luftspaltstrecken. Sinngemäß sind die übrigen Enden 38 bis auf ein konstruktiv vertretbares Mindestmaß an die Stirnseiten 36 und 37 des Schaltkörpers 32 herangeführt. In der Figur 1 sind Trag- bzw. Befestigungsmittel für den ersten Magnetflußleitkörper 36 angedeutet, die beispielsweise in Form von in der Figur 4 angedeuteten Krallen 40 ausgebildet sind. Es steht dem Konstrukteur auch frei, die Magnetflußleitmittel 36 und 37 beispielsweise in thermoplastische Befestigungsmittel einzubetten zwecks Ausrichtung und Lagesicherung relativ zum ruhenden magnetfeldempfindlichen Sensor 35 und zu dem Schaltkörper 32, der zwischen den beiden Magnetflußleitkörpern 36 und 37 auf einer kreisbogenförmigen Bahn zu bewegen ist.

Die möglichen Bewegungsrichtungen relativ zu den Enden 38 und damit den Magnetflußleitkörpern 36 und 37 ist in der Figur 3 dargestellt mittels eines Doppelpfeiles 39. Damit ist erkennbar, daß ein Hineinbewegen eines Polpaares, beispielsweise aus einem Nordpol N und einem Südpol S bestehend, zwischen die Enden 38 zu einem magnetischen Fluß durch den magnetfeldempfindlichen Sensor 35 führt, der in dem erwähnten großen Abstand von dem Schaltkörper 32 angeordnet ist. Je nach Magnetisierung des Schaltkörpers 32 ist zumindest eine Änderung des erwähnten magnetischen Flusses bezüglich dessen Intensität zu erwarten. Auch eine Intensitätsänderung bewirkt eine Signaländerung, die der steuernden Schalteinrichtung 9 zur Verfügung steht. Wenn, wie in der Figur 3 dies durch einen zweiten Südpol S2 und einen zweiten Nordpol N2 dargestellt ist, durch Bewegen des Schaltkörpers 32 gemäß dem Doppelpfeil 39 zwei Magnetflüsse mit unterschiedlichen Richtungen nacheinander die Magnetfeldgleitkörper 35, 36 und den magnetfeldempfindlichen Sensor 35 durchsetzen, vermag der magnetfeldempfindliche Sensor 35 sogar ein Signal mit Polaritätswechsel der steuernden Schalteinrichtung 9 zur Verfügung zu stellen.

Ergänzend wird noch darauf hingewiesen, daß es genügt, den Schaltkörper 32 nur auf einem Teil seines Umfanges magnetisierbar zu gestalten. Insoweit besteht die Möglichkeit, einen nicht gezeichneten stabförmigen Permanentmagnet in paralleler Ausrichtung zu der Welle 27,an einem dem Permanentmagnet angepaßten Abtriebselement 31 anzuordnen.

Erkennbar gibt es also unterschiedliche Möglichkeiten, das beschriebene Prinzip "magnetfeldempfindlicher Sensor 35 in großem Abstand von einem magnetisierten Schaltkörper 32 und Anordnung von Magnetflußleitkörpern 36, 37" in eine konstruktive bauliche Lösung umzusetzen.

## Patentansprüche

1. Antriebsvorrichtung (2) für ein zwischen Endstellungen verstellbares Teil eines Fahrzeugs, insbesondere für eine Dachplatte eines Fahrzeugdaches, mit einem Elektromotor (3), der mit dem verstellbaren Teil zu dessen Antrieb verbindbar ist, mit einer den Elektromotor (3) steuernden Schalteinrichtung (9) zum Stillsetzen des Elektromotors (3) in mindestens einer vorbestimmten Stellung des verstellbaren Teiles, mit einem wenigstens mittelbar von dem Elektromotor (3) drehbaren Abtriebselement (31), mit einem Schaltkörper (32), der an dem Abtriebselement (31) befestigt ist und von diesem auf einer kreisbogenförmigen Bahn bewegbar ist, und mit einem der steuernden Schalteinrichtung (9) zugeordneten magnetfeldempfindlichen Sensor (35) zum Steuern der steuernden Schalteinrichtung (9), wobei der magnetfeldempfindliche Sensor (35) auf einer Leiterbahnplatte (20) mit Bestandteilen der steuernden Schalteinrichtung (9) angeordnet ist und wobei die Leiterbahnplatte (20) innerhalb eines Gehäuses (6, 7, 8) angeordnet ist, **dadurch gekennzeichnet, daß** die Leiterbahnplatte (20) in einem radialen Abstand von der kreisbogenartigen Bewegungsbahn des Schaltkörpers (32) entfernt angeordnet ist, wobei der Abstand größer als Abmessungen des magnetfeldempfindlichen Sensors (35) ist, wobei der Schaltkörper (32) zwei axialen Stirnseiten (33) und (34) aufweist und zwischen dem magnetfeldempfindlichen Sensor (35) und den beiden axialen Stirnseiten (33) und (34) jeweils ein erster Magnetflussleitkörper (36) und ein zweiter Magnetflussleitkörper (37) angeordnet sind, wenn sich der Schaltkörper (32) in seiner Schaltposition befindet.

2. Antriebsvorrichtung nach Anspruch 1, **dadurch gekennzeichnet, daß** der Schaltkörper (32) im wesentlichen als eine konzentrisch zum Antriebselement (31) angeordnete magnetisierte Ringscheibe ausgebildet ist mit einer ersten Stirnseite (33) und einer zweiten Stirnseite (34), wobei eine der Stirnseiten wenigstens einen Nordpol (N) und die gegenüberliegende Stirnseite einen zugeordneten Südpol (S) aufweist, und daß die Magnetflußleitkörper (36, 37) in axialer Ausrichtung zu den Stirnseiten (33, 34) identisch angeordnet sind.

3. Antriebsvorrichtung nach Anspruch 1 oder 2, **dadurch gekennzeichnet, daß** wenigstens ein zusätzlicher magnetfeldempfindlicher Sensor auf der Leiterbahnplatte (20) in einem Abstand von dem Schaltkörper (32) angeordnet ist und daß dem zusätzlichen Sensor (35) wenigstens ein zusätzlicher Magnetflußleitkörper (36, 37) zugeordnet ist.

4. Antriebsvorrichtung nach Anspruch 1 oder 2, **dadurch gekennzeichnet, dass** die Magnetflussleitkörper (36) und (37) winkelig gebogene Enden (38) aufweisen, die einerseits gegen den magnetfeldempfindlichen Sensor (35) und andererseits gegen die Stirnseiten (33, 34) des Schaltkörpers (32) gerichtet sind.

5. Antriebsvorrichtung nach Anspruch 1 oder 2, **dadurch gekennzeichnet, dass** die Magnetflussleitkörper (36) und (37) in thermoplastische Befestigungsmittel eingebettet sind.

6. Antriebsvorrichtung nach Anspruch 1 oder 2, **dadurch gekennzeichnet, dass** die Magnetflussleitkörper (36) und (37) aus Drahtabschnitten eines weichmagnetischen Werkstoffes bestehen und beispielsweise einen quadratischem Querschnitt aufweisen.

7. Antriebsvorrichtung nach Anspruch 1 oder 2, **dadurch gekennzeichnet, dass** das drehbare Abtriebselement (31) mit dem Schaltkörpers (32) mittels eines Untersetzungsgetriebes (5) auf einer kreisbogenförmigen Bahn bewegt wird, derart, dass bei einer Verstellung des verstellbaren Teils zwischen zwei konstruktiv festgelegten Endstellungen das Abtriebselement (31) eine Drehung von weniger als 360° erfährt.

8. Antriebsvorrichtung nach Anspruch 1 oder 2, **dadurch gekennzeichnet, dass** der Schaltkörper 32 als ein stabförmiger Permanentmagnet in paralleler Ausrichtung zu einer Welle (27) eines Ritzels (28) ausgebildet ist, das mit dem zu verstellenden Teil verbunden ist.

## Claims

1. Drive apparatus (2) for a part of a vehicle, which part can be adjusted between end positions, in particular for a roof panel of a vehicle roof, comprising an electric motor (3) which can be connected to the drive of the adjustable part, comprising a switching device (9), which controls the electric motor (3), for stopping the electric motor (3) in at least one predetermined position of the adjustable part, comprising an output element (31) which can be rotated at least indirectly by the electric motor (3), comprising a switching body (32) which is fixed to the output element (31) and can be moved on a path which is in the form of an arc of a circle by the said output element, and comprising a magnetic field-sensitive sensor (35), which is associated with the controlling switching device (9), for controlling the controlling switching device (9), with the magnetic field-sensitive sensor (35) being arranged on a printed circuit board (20) with components of the controlling switching device (9), and with the printed circuit board (20) being arranged within a housing (6, 7, 8), **characterized in that** the printed circuit board (20) is arranged at a radial distance remote from the movement path, which is in the form of an arc of a circle, of the switching body (32), with the distance being greater than the dimensions of the magnetic field-sensitive sensor (35), with the switching body (32) having two axial end faces (33) and (34) and a first magnetic flux guide body (36) and a second magnet flux guide body (37) respectively being arranged between the magnetic field-sensitive sensor (35) and the two axial end faces (33) and (34) when the switching body (32) is in its switching position.

2. Drive apparatus according to Claim 1, **characterized in that** the switching body (32) is substantially in the form of a magnetized annular disc which is arranged concentrically in relation to the drive element (31) and has a first end face (33) and a second end face (34), with one of the end faces having at least one north pole (N) and the opposite end face having an associated south pole (S), and **in that** the magnetic flux guide bodies (36, 37) are arranged identically with an axial orientation in relation to the end faces (33, 34).

3. Drive apparatus according to Claim 1 or 2, **characterized in that** at least one additional magnetic field-sensitive sensor is arranged on the printed circuit board (20) at a distance from the switching body (32), and **in that** the additional sensor (35) has at least one additional associated magnetic flux guide body (36, 37).

4. Drive apparatus according to Claim 1 or 2, **characterized in that** the magnetic flux guide bodies (36) and (37) have angled ends (38) which are firstly directed toward the magnetic field-sensitive sensor (35) and secondly directed toward the end faces (33, 34) of the switching body (32).

5. Drive apparatus according to Claim 1 or 2, **characterized in that** the magnetic flux guide bodies (36) and (37) are embedded in thermoplastic fixing means.

6. Drive apparatus according to Claim 1 or 2, **characterized in that** the magnetic flux guide bodies (36) and (37) are composed of wire sections of a soft-magnetic material and have, for example, a square cross section.

7. Drive apparatus according to Claim 1 or 2, **characterized in that** the rotatable output element (31) is moved with the switching body (32) on a path which is in the form of an arc of a circle by means of a step-down gear mechanism (5) in such a way that the output element (31) is rotated through less than 360° when the adjustable part is adjusted between two structurally fixed end positions.

8. Drive apparatus according to Claim 1 or 2, **characterized in that** the switching body (32) is in the form of a rod-like permanent magnet with a parallel orientation in relation to a shaft (27) of a pinion (28) which is connected to the part to be adjusted.

## Revendications

1. Dispositif d'entraînement (2) pour une pièce de véhicule mobile entre deux position de fin de course, notamment une plaque d'un toit de véhicule comportant un moteur électrique (3) relié à la pièce mobile pour en assurer l'entraînement, une installation de commutation (9) commandant le moteur électrique (3) pour arrêter le moteur électrique (3) dans au moins une position prédéfinie de la pièce mobile,
au moins un élément entraîné (31), mis en rotation par le moteur électrique (3),
un organe de commutation (32) fixé à l'élément d'entraînement (3) et déplacé par celui-ci sur une trajectoire en forme d'arc de cercle ainsi qu'un capteur (35) sensible au champ magnétique associé à l'installation de commutation (9) à commander, de manière à commander l'installation de commutation (9),
le capteur (35) sensible au champ magnétique étant installé sur une plaque de circuit imprimé (20) avec des éléments de l'installation de commutation (9) et
la plaque de circuit imprimé (20) est placée dans un boîtier (6, 7, 8),
**caractérisé en ce que**
la plaque de circuit (20) est installée éloignée selon une distance radiale de la trajectoire en arc de cercle de l'organe de commutation (32),
la distance étant supérieure aux dimensions du capteur (35) sensible au champ magnétique,
l'organe de commutation (32) ayant deux faces frontales axiales (33, 34) et entre le capteur (35) sensible au champ magnétique des deux faces frontales axiales (33, 34) il est prévu chaque fois un premier organe conducteur de flux magnétique (36) et un second organe conducteur de flux magnétique (37) lorsque l'organe de commutation (32) occupe sa position de commutation.

2. Dispositif d'entraînement selon la revendication 1,
**caractérisé en ce que**
l'organe de commutation (32) est réalisé pratiquement comme un disque annulaire aimanté, installé en position concentrique à l'élément d'entraînement (31), ayant une première face frontale (33) et une seconde face frontale (34),
l'une des faces frontales ayant au moins un pôle nord N et la face frontale opposée ayant un pôle sud (S) associé et
les organes conducteur de flux magnétique (36, 37) sont installés de manière identique dans l'alignement axial par rapport aux faces frontales (33, 34).

3. Dispositif d'entraînement selon la revendication 1 ou 2,
**caractérisé par**
au moins un capteur supplémentaire, sensible au champ magnétique sur la plaque de circuit imprimé (20), à une distance de l'organe de commutation (32) et
le capteur supplémentaire (35) comporte au moins un organe de guidage de flux magnétique (36, 37) supplémentaire.

4. Dispositif d'entraînement selon la revendication 1 ou 2,
**caractérisé en ce que**
les organes de guidage de flux magnétique (36) et (37) ont des extrémités (38) repliées à l'angle, et dirigées d'un côté vers le capteur (35) sensible au champ magnétique et de l'autre, contre les faces frontales (33, 34) de l'organe de commutation (32).

5. Dispositif d'entraînement selon la revendication 1 ou 2,
**caractérisé en ce que**
les organes de guidage de flux magnétique (36) et (37) sont intégrés dans des moyens de fixation thermoplastique.

6. Dispositif d'entraînement selon la revendication 1 ou 2,
**caractérisé en ce que**
les organes de guidage de flux magnétique (36) et (37) sont des segments de fil en un matériau à aimantation douce et ont par exemple une section carrée.

7. Dispositif d'entraînement selon l'une des revendications 1 ou 2,
**caractérisé en ce que**
l'élément entraîné (32), tournant, est déplacé sur une trajectoire en arc de cercle avec l'organe de commutation (32) à l'aide d'une transmission réductrice (5) de façon que pour un déplacement de la pièce réglable entre deux positions de fin de course fixées par construction, l'élément entraîné (31) exécute une rotation inférieure à 360°.

8. Dispositif d'entraînement selon la revendication 1 ou 2,
**caractérisé en ce que**
l'organe de commutation (32) est un aimant permanent en forme de tige aligné parallèlement à l'arbre (27) d'un pignon (28) relié à la pièce mobile.
